# EUROPÄISCHE PATENTSCHRIFT

(11) **EP 1 651 463 B1**
(45) Veröffentlichungstag und Bekanntmachung des Hinweises auf die Patenterteilung: **18.08.2010**
(21) Anmeldenummer: 04739685.8
(22) Anmeldetag: 08.06.2004
(51) Int. Cl.: B60K 35/00

(54) **ANZEIGEEINRICHTUNG FÜR EIN KRAFTFAHRZEUG**
DISPLAY DEVICE FOR A MOTOR VEHICLE
DISPOSITIF D'AFFICHAGE DESTINE A UN VEHICULE

(30) Priorität: 23.07.2003 DE 10333745
(43) Veröffentlichungstag der Anmeldung: 03.05.2006
(60) Teilanmeldung: 07010589.5
(73) Patentinhaber: Volkswagen Aktiengesellschaft, 38436 Wolfsburg (DE)
(72) Erfinder: SOLTENDIECK, Bernd, 38108 Braunschweig (DE); HOFMANN, Robert, 10823 Berlin (DE); HOFMANN, Gustav, 38114 Braunschweig (DE); MEDLER, Andreas, 38268 Lengede (DE); KUHN, Mathias, 14109 Berlin (DE); BAUER, Michael, 38102 Braunschweig (DE)
(86) Internationale Anmeldenummer: PCT/EP2004/006156
(87) Internationale Veröffentlichungsnummer: WO 2005/018976

(56) Entgegenhaltungen:
- WO-A-99/22960
- US-A- 4 636 782
- US-A- 5 161 480
- US-A- 5 576 886
- PATENT ABSTRACTS OF JAPAN Bd. 2002, Nr. 07, 3. Juli 2002 (2002-07-03) & JP 2002 079848 A (DENSO CORP), 19. März 2002 (2002-03-19) in der Anmeldung erwähnt

## Beschreibung

Die Erfindung betrifft eine Anzeigeeinrichtung für ein Kraftfahrzeug, insbesondere ein Kombiinstrument, mit mindestens einer ersten freiprogrammierbaren Displayeinrichtung, welche abbildendes Licht abgibt, und mindestens einer beleuchteten oder selbstleuchtenden elektromechanischen zweiten Anzeigeeinrichtung, insbesondere mindestens ein Zeigerinstrumen (siehe z. B. WO 99/22960 A1, dem Oberbegriff des unabhängigen Anspruchs 1 entsprechend).

Die Anzahl von Informationen, die einem Fahrzeugführer auf Grund der steigenden Anzahl von Komforteinrichtungen, wie Navigationseinrichtungen, Telekommunikationseinrichtungen, Fahrerassistenzsystemen und gewünschter Warnhinweise etc. angezeigt werden, steigt ständig. In vielen Fahrzeugen werden deshalb schon sogenannte Multifunktions-Bedieneinrichtungen eingesetzt, die beispielsweise in der Mittelkonsole angeordnet sind. Der Fahrer ist bei dieser Anordnung für den Informationserhalt gezwungen, seinen Blick vom Fahrgeschehen abzuwenden. Aus diesem Grund ist es von Vorteil, wenigstens ein Teil der Informationen in dem in Fahrtrichtung im Blickfeld des Fahrzeugführers befindlichen Kombiinstrument anzuzeigen. Hier entsteht das Problem, dass nur eine bestimmt Anzeigefläche im Kombiinstrument neben den analogen Anzeigeelementen für Geschwindigkeit; Drehzahl etc. zur Verfügung steht.

Aus diesem Grund wird an neuen Konzepten für Kombiinstrumente gearbeitet, die eine größere Anzahl von Informationen wiedergeben können, ohne auf die herkömmliche analogen Anzeigeinstrumente zu verzichten.

So ist aus der europäischen Patentschrift EP 482 805 B1 eine Anzeigeeinrichtung bekannt, bei der eine erste und eine zweite Bildquelle vorgesehen sind. Die abbildende Beleuchtung der ersten Bildquelle wird von einer planaren Kombiniervorrichtung und zwei weiteren im Strahlengang des reflektierten Lichtes befindlichen Spiegeln zum Beobachter reflektiert.

Die abbildende Beleuchtung der zweiten Bildquelle wird dabei von der Kombiniervorrichtung durchgelassen und dann ebenfalls von den beiden Spiegeln zum Beobachter reflektiert. Dabei kann die erste Bildquelle eine Gruppe von elektromechanischen Anzeigevorrichtungen, beispielsweise von Geschwindigkeit, Öldruck, Tankniveau, und beispielsweise Anzeigetafellichter, wie Fahrtrichtungsanzeiger, Fernlicht und Notfallanzeigen, aufweisen. Die zweite Bildquelle ist eine Flüssigkeitskristallanzeige, um alphanumerische Informationen, wie Nachrichten, Wartungsanweisungen und Einstellungen für die Umgebung, bereitzustellen. Bei der bekannten Anzeigeeinrichtung befindet sich keine der beiden Bildquellen im direkten Blickfeld des Fahrzeugführers, so dass ein rein virtuelles Bild entsteht. Des Weiteren ist es schwierig, die durch die unterschiedlich angeordneten Bildquellen und die mehrfachen Reflexionen des abbildenden Lichtes der Bildquellen entstehenden Parallaxen dahingehend in den Griff zu bekommen, dass keine Bildverzerrungen entstehen.

Im weiteren offenbart die japanische Patentanmeldung JP 2002079848 A ein Kombiinstrument für ein Kraftfahrzeug mit einer herkömmlichen elektromechanischen Anzeigeeinrichtung, in deren Anzeigebild über einen konkaven semitransparenten Spiegel, der für das abbildende Licht der elektromechanischen Anzeigeeinrichtung durchlässig ausgebildet ist, ein virtuelles Bild einer nicht im Blickfeld des Fahrzeugführers angeordneten Displayeinrichtung hinein reflektiert wird. Mit Hilfe dieser Anzeigeeinrichtung, kann jedoch nicht gegenüber herkömmlichen Anzeigeeinrichtungen das Problem gelöst werden, eine größere Menge von unterschiedlichen Informationen für den Fahrzeugführer schnell erfassbar darzustellen, da in der elektromechanischen Anzeigeeinrichtung Raum für das reflektierte Bild der Displayeinrichtung vorgehalten werden muss.

Aus der o.g. WO 99/22960 A1 ist eine Anzeigeeinrichtung bekannt, bei der ein virtuelles Zeigerinstrument durch Überlagerung eines zeigers mit Markierungen gebildet wird.

Es ist die Aufgabe der Erfindung, eine Anzeigeeinrichtung für ein Kraftfahrzeug zu schaffen, mit deren Hilfe eine größere Menge von Informationen in unterschiedlichen Anzeigemodi übersichtlich dargestellt werden kann.

Die Aufgabe wird durch die Merkmale des Patentanspruchs 1 gelöst. Vorteilhafte Ausuns Weiterbildungen sind im Unteranspruch dargestellt.

Gemäß der Erfindung ist die erste freiprogrammierbare Displayeinrichtung, die eine Flüssigkeitskristallanzeige, eine OLED-Anzeige oder irgendeine andere Anzeigeeinrichtung dieser Art sein kann, im Blickfeld des Betrachters angeordnet. Eine zweite elektromechanische Anzeigeeinrichtung, die Anzeigeelemente eines herkömmlichen Kombiinstrumentes, wie Rundinstrumente zur Geschwindigkeitsanzeige, aufweist, ist in einem Winkel zu der ersten Displayeinrichtung außerhalb des Blickfeldes des Fahrzeugführers, während er das Fahrzeug führt, angeordnet. Zwischen der ersten Displayeinrichtung und der elektromechanischen zweiten Anzeigeeinrichtung ist eine Kombinationseinrichtung derart angeordnet, dass sie das abbildende Licht der ersten Displayeinrichtung und der elektromechanischen zweiten Anzeigeeinrichtung zu einem gemeinsamen Anzeigebild zusammenführt, wobei die Kombinationseinrichtung für das abbildende Licht der ersten Displayeinrichtung durchlässig ausgebildet ist und weiterhin derart ausgebildet ist, dass sie das abbildende Licht der elektromechanischen zweiten Anzeigeeinrichtung reflektiert.

In mindestens einem Anzeigemodus der Anzeigeeinrichtung bildet das abbildende Licht der elektromechanischen zweiten Anzeigeeinrichtung durch die Beleuchtung oder die selbstleuchtende Ansteuerung mindestens eines Rundinstrumentes mindestens ein Rundinstrument, vorzugsweise mit mindestens einer Zeigerdarstellung. Wird der Zeiger nur teilweise im Bereich der Rundskala des Rundinstrumentes beleuchtet oder selbstleuchtend angesteuert, kann der Flächeninhalt des durch das abbildende Licht gebildeten Rundinstrumentes im Anzeigebild der Anzeigeeinrichtung durch das Anzeigebild der ersten Displayeinrichtung zur Informationsdarstellung genutzt werden.

Die zweite elektromechanische Anzeigeeinrichtung ist unterhalb des Blickfeldes angeordnet.

Nach einer vorteilhaften Ausbildung der erfindungsgemäßen Anzeigeeinrichtung ist diese derart aufgebaut, dass die Summe der Reflexionen des abbildenden Lichtes der ersten Displayeinrichtung und der elektromechanischen zweiten Anzeigeeinrichtung maximal vier, vorzugsweise maximal zwei, beträgt, wodurch das Problem der Bildverzerrung minimiert wird. Nach einer weiteren Ausbildung der Erfindung wird der Winkel zwischen der ersten Displayeinrichtung und der elektromechanischen zweiten Anzeigeeinrichtung durch jeweils eine Mittelachse der ersten Displayeinrichtung und der zweiten elektromechanischen Anzeigeeinrichtung gebildet.

Vorzugsweise ist zumindest die anzeigewirksame Fläche der elektromechanischen zweiten Anzeigeeinrichtung gemeinsam mit der Kombinationseinrichtung beabstandet zur Anzeigefläche der ersten Displayeinrichtung angeordnet, so dass das Anzeigebild der elektromechanischen Anzeigeeinrichtung, unabhängig ob sie vollständig oder teilweise abbildendes Licht abgibt, virtuell in einem Abstand vor der Anzeigefläche der Displayeinrichtung projiziert wird, so dass virtuell zumindest teilweise ein dreidimensionales Bild erzeugt wird. Über die Größe des Abstandes der Kombinationseinrichtung und der anzeigewirksamen Fläche der elektromechanischen Anzeigeeinrichtung wird der Abstand, in dem das Anzeigebild der elektromechanischen Anzeigeeinrichtung der Anzeige der ersten Displayeinrichtung virtuell vorgelagert ist, bestimmt.

Der Winkel zwischen der ersten Displayeinrichtung und der elektromechanischen zweiten Anzeigeeinrichtung ist kleiner als 180° und liegt vorzugsweise im Bereich zwischen 75° und 120°. Besonders vorteilhaft hat sich ein Winkel von 90° herausgestellt.

Zur Minimierung von Verzerrungen ist vorgesehen, dass die Kombinationseinrichtung den Winkel zwischen der ersten Displayanordnung und der elektromechanischen zweiten Anzeigeeinrichtung im Wesentlichen halbiert. Bei einem Winkel von 90° zwischen den beiden Anzeigeeinrichtungen ist diese in einem Winkel von 45° zu beiden Anzeigeeinrichtungen angeordnet.

Gemäß einer bevorzugten Ausführung der Erfindung ist die Kombinationseinrichtung ein teil- oder semitransparenter Spiegel, der für das Anzeigebild der ersten Displayeinrichtung durchlässig und für das Anzeigebild der elektromechanischen zweiten Anzeigeeinrichtung reflektierend ausgebildet ist.

Des Weiteren kann vorgesehen sein, dass das Anzeigebild der Anzeigeeinrichtung in mindestens in einem Anzeigemodus durch die Überlagerung des Anzeigebildes der ersten Displayeinrichtung und durch das reflektierte abbildende Licht der elektromechanischen Anzeigevorrichtung gebildet wird.

Gemäß einer vorteilhaften Ausbildung der Erfindung sind in mindestens einem Anzeigemodus nur ein oder mehrere Teile der elektromechanischen zweiten Anzeigeeinrichtung beleuchtbar und/oder selbstleuchtend angesteuert.

Neben dem mindestens einem Rundinstrument kann die elektromechanische zweite Anzeigeeinrichtung zusätzlich steuerbare Warnanzeigen, insbesondere Leuchtflächenanzeigen, beispielsweise für Blinker, Fernlicht, und/oder Warnleuchten, aufweisen.

In einer Ausbildung der Erfindung weist die elektromechanische zweite Anzeigeeinrichtung zumindest eine erste Messgrößenanzeige, insbesondere eine Geschwindigkeitsanzeige, vorzugsweise ein Rundinstrument, auf, die in einem Hauptbereich der elektromechanischen zweiten Anzeigeeinrichtung angeordnet ist. Des Weiteren ist in der elektromechanischen Anzeigeeinrichtung mindestens eine zweite Anzeige der gleichen Messgröße, insbesondere eine Geschwindigkeitsanzeige, vorzugsweise ebenfalls ein Rundinstrument, vorgesehen, die in einem seitlichen Bereich der elektromechanischen Anzeigeeinrichtung angeordnet ist. In mindestens einem Anzeigemodus der erfindungsgemäßen Anzeigeeinrichtung wird die erste Messgrößenanzeige und in mindestens einem weiteren Anzeigemodus die zweite Messgrößenanzeige dargestellt.

Vorzugsweise ist die zweite Messgrößenanzeige kleiner als die erste Messgrößenanzeige, vorzugsweise weist sie maximal ¾ der Größe, insbesondere jedoch maximal ½ der Größe, der ersten Messgrößenanzeige auf. Dies hat den Vorteil, dass in den Anzeigemodi, in denen das Anzeigebild der zweiten Messgrößenanzeige zur Anzeige kommt, der größte Teil des Anzeigebildes der Anzeigeeinrichtung für das Anzeigebild der ersten Displayeinrichtung genutzt werden kann.

In dem mindestens einem Anzeigemodus, in dem das Anzeigebild der zweiten Messgrößenanzeige zur Anzeige kommt, wird im Bereich der ersten Messgrößenanzeige im Wesentlichen nur das Anzeigebild der ersten Displayeinrichtung dargestellt. Ähnliche Messgrößenanzeigen können auch für andere Messgrößen, wie beispielsweise für die Motordrehzahl des Fahrzeuges, realisiert sein.

Nach einer vorteilhaften Ausbildung der Erfindung ist die erfindungsgemäße Anzeigeeinrichtung als so genanntes Kombinationsinstrument ausgebildet, das in Blickrichtung des Fahrers im Kraftfahrzeug angeordnet ist.

Nachfolgend wird die Erfindung anhand eines Ausführungsbeispiels näher beschrieben. Die zugehörigen Zeichnungen zeigen:
- Figur 1:: einen schematischen Aufbau der erfindungsgemäßen Anzeigeeinrichtung,
- Figur 2:: ein Anzeigebild der erfindungsgemäßen Anzeigeeinrichtung und
- Figur 3:: ein weiteres Anzeigebild der erfindungsgemäßen Anzeigeeinrichtung.

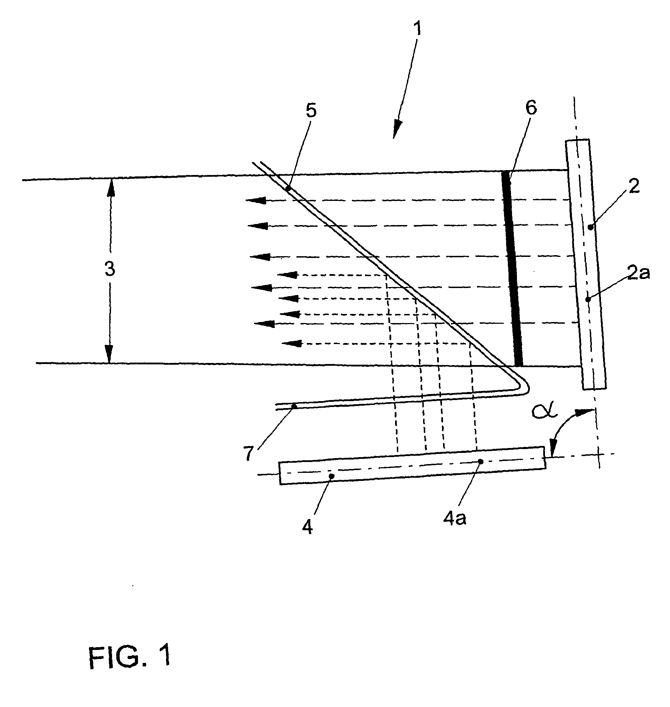

Die in Figur 1 gezeigte Anzeigeeinrichtung 1 für ein Kombiinstrument eines Kraftfahrzeugs besteht im Wesentlichen aus einer ersten Displayeinrichtung 2, die sich im unmittelbaren Blickfeld 3 des Fahrzeugführers im Bereich eines nicht dargestellten Lenkrades befindet, wenn dieser das Kraftfahrzeug führt, und einer elektromechanischen zweiten Anzeigeeinrichtung 4, die im Ausführungsbeispiel liegend, unterhalb des Blickfeldes 3 des Fahrzeugführers angeordnet ist. Die elektromechanische zweite Anzeigeeinrichtung 4 kann dabei wie ein herkömmliches Kombiinstrument mit mehreren Rundinstrumenten aufgebaut sein, deren Skalen selbstleuchtend oder beleuchtend ausgeführt sind und einen beleuchteten oder selbstleuchtenden Zeiger zur Kenntlichmachung des aktuellen Wertes aufweisen. Des Weiteren kann die elektromechanische Anzeigeeinrichtung ein oder mehrere Leuchtflächenanzeigen für Warnanzeigen oder Warnleuchten aufweisen.

Die Mittelachsen 2a und 4a der ersten Displayanordnung 2 und der elektromechanischen zweiten Anzeigeeinrichtung 4 sind vorteilhafterweise in einem Winkel α von 90° zueinander angeordnet. In einem Winkel von 45° von der elektromechanischen Anzeigeeinrichtung 4 ist eine Kombinationseinrichtung 5 vorgesehen. Im Ausführungsbeispiel ist dies ein planarer semitransparenter Spiegel, der für das abbildende Licht der ersten Displayeinrichtung 2 durchlässig ausgebildet ist, so dass ein Betrachter das Anzeigebild der Displayeinrichtung direkt wahrnimmt. Das abbildende Licht der elektromechanischen Anzeigeeinrichtung 4 wird von dem semitransparenten Spiegel 5 reflektiert, so dass es für den Betrachter dem Anzeigebild der Displayeinrichtung 2 als virtuelles Bild 6 vorgelagert erscheint. Im Ausführungsbeispiel ist oberhalb der elektromechanischen zweiten Anzeigeeinrichtung 4 eine Blende 7 aus semitransparenten Material vorgesehen, die für das abbildende Licht der Anzeigeeinrichtung 4 durchlässig ausgebildet ist und die elektromechanische Anzeigeeinrichtung 4 für den Betrachter zumindest im ausgeschalteten Zustand abdeckt.

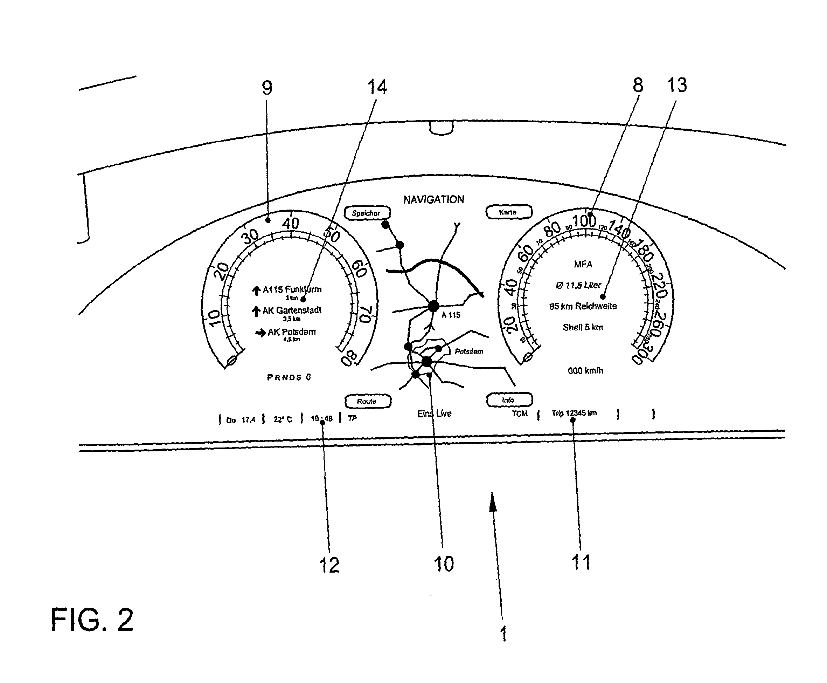

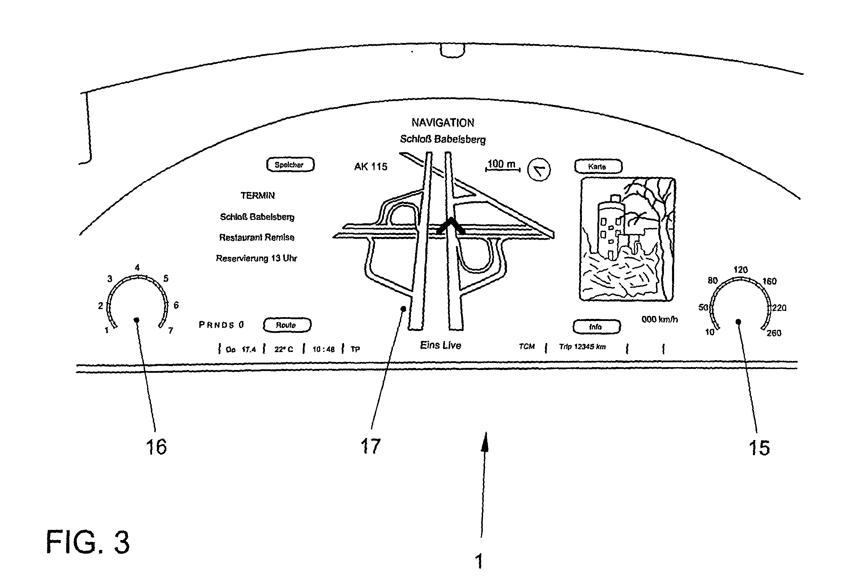

In den Figuren 2 und 3 sind mögliche Anzeigebilder der erfindungsgemäßen Anzeigeeinrichtung 1 dargestellt.

In beiden Figuren setzt sich das Anzeigebild durch Anzeigebildteile, die von der ersten Displayeinrichtung 2 und von der elektromechanischen zweiten Anzeigeeinrichtung 4 kommen, zusammen. Es ist jedoch auch möglich, dass ein Anzeigebild vollständig durch ein Anzeigebild der Displayeinrichtung 2 oder der Anzeigeeinrichtung 4 gebildet ist. In Figur 2 erfolgt die Darstellung der Rundinstrumente 8, 9 für die Fahrgeschwindigkeit und die Motordrehzahl durch das abbildende Licht der elektromechanischen zweiten Anzeigeeinrichtung 4. Die anderen Anzeigeelemente 10 - 12, einschließlich der alphanumerischen Anzeigen 13, 14 stammen von der ersten Displayeinrichtung 2. Bei dem Anzeigebild der Figur 3 sind die Rundinstrumente 8, 9 der elektromechanischen Anzeigeeinrichtung 4 aus Figur 2 ausgeblendet bzw. die Rundinstrumente 8, 9 sind nicht beleuchtet oder selbstleuchtend angesteuert. Damit steht der Hauptbereich des Anzeigebildes der Anzeigeeinrichtung 1 dem Anzeigebild 17 der Displayeinrichtung 2 zur Verfügung. Für die Anzeige der Fahrgeschwindigkeit und der Motordrehzahl sind im Randbereich der elektromechanischen zweiten Anzeigeeinrichtung 4 kleinere Rundinstrumente 15, 16 beleuchtet bzw. selbstleuchtend angesteuert, so dass diese Rundinstrumente 15, 16 im Anzeigebild der Anzeigeeinrichtung 1 dem Anzeigebild 17 der Displayeinrichtung 2 vorgelagert sind. Die Anzeigebilder der Figur 2 und Figur 3 sind hier nur beispielhaft angegeben. Im Rahmen der Erfindung ist die Realisierung der unterschiedlichsten Anzeigebilder der Anzeigeeinrichtung 1 mit den gleichen als auch anderen Anzeigeelementen denkbar.

## Patentansprüche

1. Anzeigeeinrichtung für ein Kraftfahrzeug, insbesondere ein Kombiinstrument, mit mindestens einer ersten Displayeinrichtung (2), welche abbildendes Licht abgibt, und mindestens einer beleuchteten und/oder selbstleuchtenden elektromechanischen zweiten Anzeigeeinrichtung (4), insbesondere mindestens ein Zeigerinstrument, mit folgenden Merkmalen:
- die erste Displayeinrichtung (2) ist in einem Blickfeld (3) eines Betrachters angeordnet,
- die erste Displayeinrichtung (2) und die zweite elektromechanische Anzeigeeinrichtung (4) sind in einem Winkel (α) zueinander angeordnet,
- zwischen der ersten Displayeinrichtung (2) und der elektromechanischen zweiten Anzeigeeinrichtung (4) ist eine Kombinationseinrichtung (5) vorgesehen, die für das abbildende Licht der ersten Displayeinrichtung (2) durchlässig und für das abbildende Licht der elektromechanischen zweiten Anzeigeeinrichtung (4) reflektierend ausgebildet ist,
**gekennzeichnet durch** die weiteren Merkmale:
- in mindestens einem Anzeigemodus bildet das abbildende Licht der elektromechanischen zweiten Anzeigeinrichtung (4) mindestens ein Rundinstrument (8, 9, 15, 16),
- die zweite elektromechanische Anzeigeeinrichtung (4) ist unterhalb des Blickfeldes (3) des Betrachters angeordnet.

2. Anzeigeeinrichtung nach Anspruch 1, **dadurch gekennzeichnet, dass** oberhalb der elektromechanischen zweiten Anzeigeeinrichtung (4) eine Blende (7) aus semitransparentem Material vorgesehen ist, die für das abbildende Licht der elektromechanischen zweiten Anzeigeeinrichtung (4) durchlässig ausgebildet ist und die elektromechanische zweite Anzeigeeinrichtung (4) für den Betrachter zumindest im ausgeschalteten Zustand abdeckt.

## Claims

1. Indicating device for a motor vehicle, in particular a combination instrument, having at least a first display device (2) which outputs imaging light, and at least a second, illuminating and/or self-luminous electromechanical indicating device (4), in particular at least one pointer instrument, having the following features:
- the first display device (2) is arranged in a field of view (3) of a viewer,
- the first display device (2) and the second, electromechanical indicating device (4) are arranged at an angle (α) to one another, and
- provided between the first display device (2) and the second, electromechanical indicating device (4) is a combination device (5) which is designed to be transmissive to the imaging light of the first display device (2) and to be reflecting for the imaging light of the second, electromechanical indicating device (4),
**characterized by** the further features that:
- in at least one indicating mode, the imaging light of the second, electromechanical indicating device (4) forms at least one round instrument (8, 9, 15, 16), and
- the second, electromechenical indicating device (4) is arranged below the field of view (3) of the viewer.

2. Indicating device according to Claim 1, **characterized in that** provided above the second, electromechanical indicating device (4) is a diaphragm (7) which is made from semi-transparent material and is designed to be transmissive to the imaging light of the second, electromechanical indicating device (4), and covers the second, electromechanical indicating device (4) for the viewer at least in the switched-off state.

## Revendications

1. Dispositif d'affichage destiné à un véhicule automobile, notamment combiné d'instruments, avec au moins un premier dispositif d'affichage (2) qui émet une lumière reproduite et au moins un deuxième dispositif d'affichage (4) électromécanique éclairé et/ou autoéclairé, notamment au moins un instrument à aiguille, avec les caractéristiques suivantes :
le premier dispositif d'affichage (2) est disposé dans le champ de vision (3) d'un observateur,
le premier dispositif d'affichage (2) et le deuxième dispositif d'affichage (4) électromécanique sont disposés selon un angle (α) l'un par rapport à l'autre ;
un dispositif de combinaison (5) est prévu entre le premier dispositif d'affichage (2) et le deuxième dispositif d'affichage (4) électromécanique, ledit dispositif de combinaison étant réalisé de façon traversante pour la lumière reproduite du premier dispositif d'affichage (2) et de façon réfléchissante pour la lumière reproduite du deuxième dispositif d'affichage (4) électromécanique ;
**caractérisé par** les caractéristiques supplémentaires suivantes :
dans au moins un mode d'affichage, la lumière reproduite du deuxième dispositif d'affichage (4) électromécanique comprend au moins un instrument rond (8, 9, 15, 16) ;
le deuxième dispositif d'affichage (4) électromécanique est disposé en dessous du champ de vision (3) de l'observateur.

2. Dispositif d'affichage selon la revendication 1, **caractérisé en ce qu'**un cache (7) en matériau semi-transparent est prévu au-dessus du deuxième dispositif d'affichage (4) électromécanique, ledit cache étant réalisé de façon à laisser passer la lumière reproduite du deuxième dispositif d'affichage (4) électromécanique et à recouvrir le deuxième dispositif d'affichage (4) électromécanique pour le cacher de la vue de l'observateur au moins à l'état déconnecté.
